(19) Europäisches Patentamt

European Patent Office

Office européen des brevets

(11) **EP 1 659 676 A1**

(12) **DEMANDE DE BREVET EUROPEEN**

(43) Date de publication:
**24.05.2006 Bulletin 2006/21**

(51) Int Cl.:
***H02K 33/16*** *(2006.01)*

(21) Numéro de dépôt: **04105855.3**

(22) Date de dépôt: **17.11.2004**

(84) Etats contractants désignés:
**AT BE BG CH CY CZ DE DK EE ES FI FR GB GR HU IE IS IT LI LU MC NL PL PT RO SE SI SK TR**
Etats d'extension désignés:
**AL HR LT LV MK YU**

(71) Demandeur: **ETA SA Manufacture Horlogère Suisse**
**2540 Grenchen (CH)**

(72) Inventeurs:
• **Taghezout, Daho**
  **1110 Morges (CH)**
• **Berthoud-dit-Gallon, Joerg**
  **2613 Villeret (CH)**

(74) Mandataire: **Vigand, Philippe et al**
  **ICB,**
  **Ingénieurs Conseils en Brevets SA,**
  **Rue des Sors 7**
  **2074 Marin (CH)**

(54) **Vibreur pour un objet portable**

(57)    Le vibreur (1) est destiné à équiper un objet portable de petite taille, tel qu'une montre-bracelet. Le vibreur comprend une bobine plate annulaire (2) reliée à une structure fixe amagnétique (5) et une masse oscillante reliée à la structure amagnétique par au moins une lame ressort (4a, 4b) afin d'être montée mobile par rapport à la bobine annulaire sans contact mécanique avec ladite bobine. La bobine est constituée de plusieurs spires jointives et sensiblement coaxiales. La masse oscillante comprend une structure magnétique avec au moins un aimant permanent (3a, 3b, 3c, 3d) fixé sur une plaque ferromagnétique (6a, 6b). La ou les lames ressorts sont fixées à une de leurs extrémités sur la structure amagnétique. L'aimant permanent peut constituer une partie polaire de la structure magnétique, qui est positionnée distante et en regard d'une portion de la bobine annulaire afin que le champ magnétique produit par l'aimant permanent soit dirigé à la sortie de la partie polaire de la structure magnétique dans une direction sensiblement parallèle à un axe de la bobine. De cette façon, la masse oscillante est susceptible de décrire un mouvement dans une direction sensiblement perpendiculaire à l'axe de la bobine parallèlement au plan principal de la bobine annulaire (2), quand ladite bobine est alimentée par des signaux électriques alternatifs à une fréquence déterminée.

Fig. 1a

EP 1 659 676 A1

**Description**

La présente invention concerne un vibreur pour un objet portable, tel qu'une montre-bracelet pour servir par exemple d'alarme silencieuse. Le vibreur comprend une bobine plate annulaire reliée à une structure fixe amagnétique, ladite bobine étant constituée d'un enroulement d'une ou plusieurs spires sensiblement coaxiales. Le vibreur comprend également une masse oscillante reliée à la structure amagnétique par au moins un élément ressort afin d'être montée mobile par rapport à la bobine annulaire sans contact mécanique avec ladite bobine. La masse oscillante comprend une structure magnétique munie d'au moins un aimant permanent. Le vibreur peut être défini comme un vibreur du type Voice Coil.

Dans plusieurs objets portables, tels que des téléphones mobiles, des organiseurs traditionnels, des dispositifs de recherche de personnes ou des montres-bracelets, des vibreurs sont souvent employés de manière à fournir un avertissement silencieux ou une alarme silencieuse. Au moins une bobine de ces vibreurs peut être électriquement activée pour actionner une masse afin de créer une vibration à basse fréquence qui peut être ressentie par le porteur d'un tel objet. La vibration peut être commandée en fonction d'une programmation spécifique de l'objet portable de manière à avertir son porteur d'un événement spécifique, par exemple une heure de réveil, un appel téléphonique ou autre.

Dans des téléphones mobiles, il est bien connu d'utiliser des vibreurs sous la forme d'un moteur rotatif sur l'axe de rotation duquel est monté une masse excentrée. Quand ledit moteur est alimenté électriquement, la rotation de la masse excentrée produit une vibration du téléphone qui peut être facilement ressentie par le porteur dudit téléphone. Toutefois ce type de vibreur est relativement volumineux et susceptible de consommer beaucoup d'énergie électrique. Ceci ne permet pas d'équiper un objet portable, tel qu'une montre-bracelet qui est alimentée électriquement par une batterie ou une pile de petite taille.

Le document EP 0 625 738 décrit un autre type de vibreur électromagnétique pour équiper une montre-bracelet afin de produire une alarme non sonore. Ce vibreur est constitué d'une bobine cylindrique montée sur un corps d'une structure ferromagnétique, d'une masse oscillante qui comprend un aimant permanent polarisé dans une direction parallèle à l'axe de la bobine, et d'éléments élastiques reliant la masse oscillante à la structure ferromagnétique. La structure ferromagnétique comprend des portions d'excitation électromagnétique dirigées perpendiculairement par rapport à l'axe de la bobine, ces portions d'excitation étant en regard de parties polaires de la masse oscillante. Lorsque la bobine est alimentée par des signaux électriques alternatifs, la masse avec l'aimant permanent décrit un mouvement oscillant quasi-linéaire.

Un inconvénient d'un tel vibreur est qu'en l'absence de signaux électriques d'alimentation de la bobine, un couple réluctant important ou force d'attraction subsiste entre la masse oscillante au repos et les portions d'excitation de la structure ferromagnétique. Ce couple réluctant a pour conséquence d'ajouter une composante de force dans des directions parallèle et perpendiculaire au mouvement de la masse oscillante, similaire à celle d'un ressort. Avec une force d'attraction dans la direction perpendiculaire au mouvement de la masse oscillante, un flambage des éléments élastiques survient, ce qui contribue à l'excitation de modes de vibration parasites. Ceci prétérite l'efficacité dudit vibreur. De plus le rendement de ce vibreur est fortement lié à l'épaisseur de l'entrefer qui doit être maintenu à une très faible valeur entre les portions d'excitation et les parties polaires de la masse. De ce fait, la fréquence de résonance de la masse oscillante dépend fortement des tolérances de fabrication et de l'entrefer, car cette fréquence de résonance est dépendante d'une constante parasite qui est due au couple réluctant. Ceci exige une électronique complexe qui détermine la fréquence de résonance.

Un autre inconvénient du vibreur du document EP 0 625 738 est que, lors du déplacement de la masse oscillante avec son aimant permanent, des courants induits sont générés dans la structure ferromagnétique de la bobine. Ceci a pour effet d'augmenter le coefficient de frottement visqueux du vibreur, et ainsi diminuer l'amplitude de vibration.

Le document US 5,602,432 décrit un vibreur pour un objet portable, qui est conçu de manière à éviter d'être dépendant d'un couple réluctant en l'absence d'alimentation électrique de la bobine du vibreur. Pour ce faire, ce vibreur comprend une bobine annulaire fixée sur une base en résine synthétique amagnétique et une lame ressort fixée à une extrémité sur une entretoise de la base en résine. La lame ressort porte à l'autre extrémité un aimant permanent et une culasse entourant l'aimant avec un espace annulaire. Au repos, l'aimant est placé en partie à l'intérieur de la bobine annulaire, alors que la culasse entoure une portion extérieure de bobine. Lorsque la bobine annulaire est alimentée par des signaux électriques alternatifs, la masse oscillante, qui est constituée par l'aimant permanent et la culasse ferromagnétique, oscille dans une direction parallèle à l'axe de la bobine.

Un inconvénient d'un tel vibreur est que le déplacement de la masse se fait dans une direction perpendiculaire au plan de la bobine, ce qui nécessite de limiter la hauteur du vibreur en minimisant l'amplitude de déplacement de la masse oscillante grâce à des butées mécaniques. De ce fait, cela contribue à une limitation de la sensation de vibration ressentie par le porteur de l'objet portable qui comprend le vibreur, lorsque le vibreur est dans un mode de fonctionnement.

Un autre inconvénient du vibreur du document US 5,602,432 est qu'il ne permet pas d'obtenir un bon rendement, car avec une telle structure du vibreur, il n'est pas avantageux d'augmenter l'épaisseur de la bobine.

Pour obtenir un bon rendement, l'entrefer entre l'aimant et la bobine doit rester faible par rapport à l'épaisseur de l'aimant, et le nombre de spires et le volume de la bobine doivent être maximisés afin de maintenir la consommation du vibreur à un niveau acceptable. Si le nombre de spires et le volume de la bobine étaient augmentés dans le vibreur du document US 5,602,432, il y aurait une augmentation de l'entrefer causant une diminution de l'induction magnétique générée par l'aimant.

L'invention a donc pour but principal de pallier les inconvénients cités ci-dessus en fournissant un vibreur de conception simple et de petite taille pour un objet portable sans ou pratiquement sans couple réluctant parasite dans un mode de repos de la bobine. De plus, il peut être configuré pour limiter la consommation électrique du vibreur et obtenir un bon rendement.

A cet effet l'invention concerne un vibreur pour un objet portable cité ci-devant qui se caractérise en ce qu'une partie polaire de la structure magnétique est positionnée distante et en regard d'une portion de la bobine annulaire afin que le champ magnétique produit par l'aimant permanent soit dirigé à la sortie de la partie polaire de la structure magnétique dans une direction sensiblement parallèle à un axe de la bobine de manière que la masse oscillante décrive un mouvement dans une direction sensiblement perpendiculaire à l'axe de la bobine parallèlement au plan de la ou des spires de la bobine quand ladite bobine est alimentée par des signaux électriques alternatifs à une fréquence déterminée.

Un avantage du vibreur, selon l'invention, réside dans le fait que la masse oscillante, composée principalement de la partie polaire, oscille perpendiculairement à l'axe de la bobine parallèlement au plan principal de la bobine annulaire quand la bobine est alimentée par des signaux électriques alternatifs. Ceci permet de maximiser le nombre de spires de la bobine et son volume, tout en gardant une distance d'entrefer déterminée entre la partie polaire et la portion de bobine afin de maintenir une consommation électrique à un niveau acceptable. L'entrefer entre l'aimant et la bobine peut ainsi être facilement réduit afin d'obtenir un bon rendement du vibreur de petite taille.

De préférence, la masse oscillante est composée d'au moins deux aimants adjacents de direction de polarisation opposée, ainsi que d'une plaque ferromagnétique sur laquelle sont fixés lesdits aimants. La plaque et les deux aimants sont maintenus en regard de la bobine entre des portions libres de mouvement d'une ou deux lames ressorts, dont l'autre extrémité est fixée sur la structure amagnétique. Chaque aimant permanent est en regard d'une des deux portions de bobine diamétralement opposées. Ceci permet à la masse oscillante de pouvoir décrire un mouvement dans une direction perpendiculaire à l'axe de la bobine quand cette dernière est alimentée par des signaux alternatifs, notamment des signaux de courant de forme sinusoïdale ou rectangulaire. En fonction du type de liaison élastique de la masse oscillante à la structure amagnétique, la masse oscillante peut décrire un mouvement en translation ou en rotation.

Avantageusement, la structure magnétique du vibreur peut comprendre encore des troisième et quatrième aimants de direction de polarisation opposée, qui sont fixés sur une autre plaque ferromagnétique. Ces aimants sont placés respectivement en regard des première et seconde portions de la bobine sur un côté opposé à l'ensemble composé des premier et second aimants permanents et de la première plaque ferromagnétique. Tous les aimants permanents sont de préférence de dimension équivalente.

Le vibreur est composé de pièces qui peuvent facilement être fabriquées et assemblées sans devoir ajuster très précisément les tolérances d'entrefer lors du montage du vibreur. De ce fait, son coût de fabrication peut ainsi être fortement réduit en comparaison du vibreur du document EP 0 625 738. De plus, la masse oscillante, qui comprend la partie polaire, tel qu'au moins un aimant permanent, peut être avantageusement moins importante que dans le cas du vibreur du document EP 0 625 738 pour une sensation de vibration équivalente par augmentation de l'amplitude d'oscillation. L'augmentation d'oscillation peut être effectuée avec le vibreur selon l'invention, car le déplacement de la masse oscillante n'est pas limité par des butées.

Un autre avantage du vibreur selon l'invention est que comme le coefficient d'élasticité des lames ressorts utilisées peut être bien défini, l'électronique peut être simplifiée notamment pour mesurer la fréquence de résonance de la masse oscillante du vibreur. Ceci est dû au fait qu'aucun couple réluctant parasite ne subsiste en mode de repos de la bobine. Cette électronique doit être généralement conçue de manière à alimenter le vibreur à sa fréquence de résonance, qui n'est pas fixe, car elle dépend également des conditions de porter de l'objet portable, tel qu'une montre-bracelet, et d'un coefficient de frottement visqueux. Toutefois, l'ajustement de la fréquence de résonance théorique peut être faite également en pratiquant par exemple des fentes longitudinales sur les lames ressorts.

Un autre avantage du vibreur selon l'invention est que l'inductance de la bobine est beaucoup plus faible que dans le cas du vibreur EP 0 625 738 par exemple. Ceci implique pour la même tension d'alimentation, un courant plus élevé, donc une force plus élevée agissant sur la masse oscillante.

Si le vibreur est monté dans le boîtier d'un objet portable, tel qu'une montre-bracelet de faible épaisseur, il peut être fixé sur la platine de montre de manière à pouvoir osciller dans le plan principal du mouvement horloger. Avec un tel montage du vibreur sur la platine de montre, une vibration de relativement grande amplitude est plus facilement réalisable que pour tout autre vibreur de conception traditionnelle. De plus, le vibreur selon l'invention peut être contenu dans des épaisseurs très faibles par rapport à des vibreurs traditionnels.

A cet effet, l'invention concerne également une montre-bracelet en tant qu'objet portable comprenant un vibreur, qui se caractérise en ce que le vibreur est positionné dans un boîtier de ladite montre de telle manière que la masse oscillante du vibreur oscille dans une direction sensiblement perpendiculaire au fond du boîtier de la montre, quand la bobine annulaire est alimentée par des signaux électriques alternatifs de fréquence déterminée.

Un avantage de cette montre-bracelet selon l'invention est qu'en plaçant le vibreur dans le boîtier de la montre de telle manière que la masse oscillante oscille dans une direction perpendiculaire au fond du boîtier de la montre, cela procure une meilleure sensation des vibrations au porteur de la montre.

Les buts, avantages et caractéristiques du vibreur pour un objet portable apparaîtront mieux dans la description suivante de modes de réalisation de l'invention en liaison avec les dessins dans lesquels :

- les figures 1a et 1b représentent une vue tridimensionnelle et une vue en coupe selon A-A de la figure 1a d'un premier mode de réalisation du vibreur selon l'invention,
- la figure 2 représente une vue partielle d'une bobine annulaire allongée au-dessus d'aimants permanents fixés sur une plaque ferromagnétique et en regard de deux portions de bobine pour un vibreur selon l'invention,
- les figures 3a à 3c représentent une vue tridimensionnelle, une vue de côté et une vue en coupe selon B-B de la figure 3b d'un second mode de réalisation du vibreur selon l'invention,
- les figures 4a et 4b représentent une vue tridimensionnelle et une vue en coupe selon C-C de la figure 4a d'un troisième mode de réalisation du vibreur selon l'invention,
- la figure 5 représente un graphique du facteur de couplage en fonction de la position de la masse oscillante par rapport à la bobine pour diverses constructions du vibreur selon l'invention,
- la figure 6 représente un graphique de la force parasite dans la direction de l'axe de la bobine en fonction de la position de la masse oscillante par rapport à la bobine pour diverses constructions du vibreur selon l'invention, et
- la figure 7 représente un graphique de la valeur d'inductance de la bobine en fonction de la position de la masse oscillante par rapport à la bobine pour diverses constructions du vibreur selon l'invention.

Dans la description suivante, tous les éléments du vibreur qui sont bien connus d'un homme du métier dans ce domaine technique, seront expliqués de manière simplifiée. Les modes de réalisation décrits concernent spécifiquement un vibreur du type Voice Coil pour équiper une montre-bracelet en tant qu'objet portable.

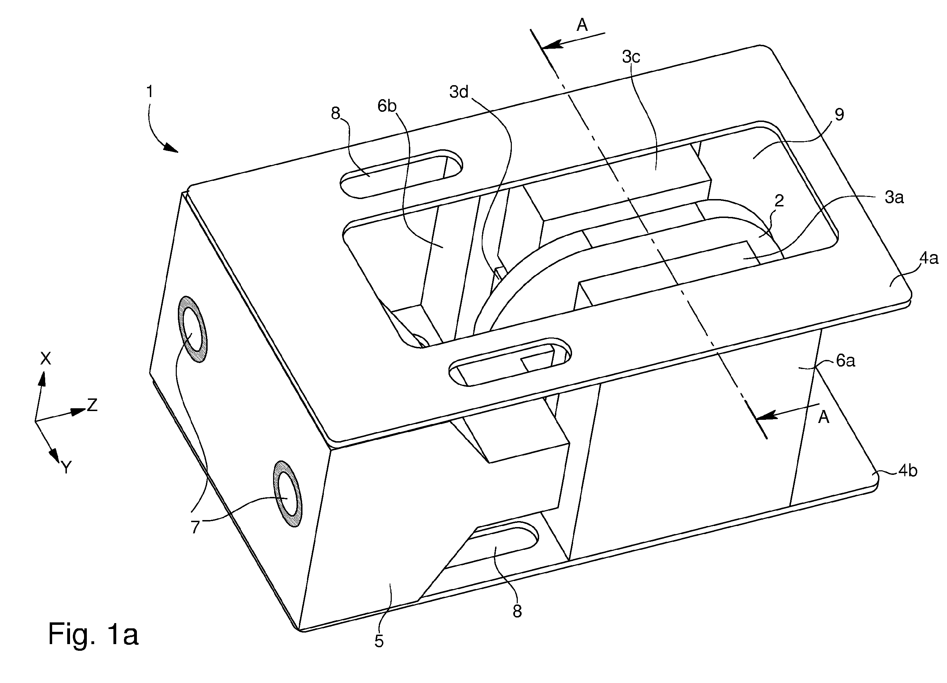

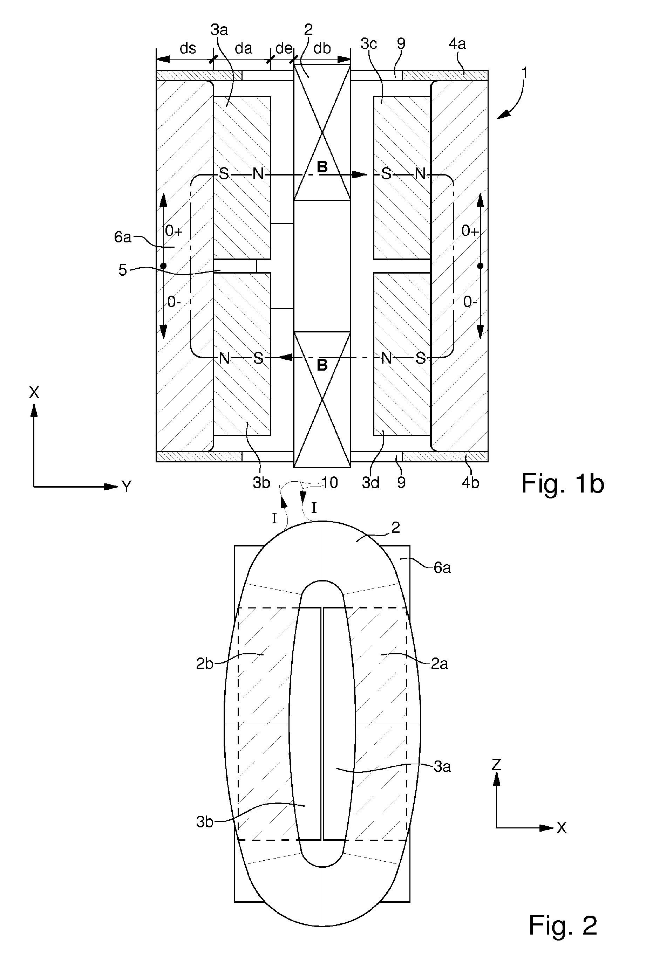

Les figures 1a et 1b représentent un premier mode de réalisation du vibreur 1 formant un module destiné à équiper une montre-bracelet en tant qu'objet portable. Le vibreur 1 comprend une bobine plate annulaire 2, qui est fixée en bordure à une structure amagnétique 5, et une structure magnétique reliée à la structure amagnétique sans contact mécanique avec la bobine. La structure magnétique comprend une première plaque ferromagnétique 6a sur laquelle sont fixées des première et seconde parties polaires 3a et 3b en regard respectivement de deux portions diamétralement opposées de la bobine. La structure magnétique comprend également une seconde plaque ferromagnétique 6b, sur laquelle sont fixées des troisième et quatrième parties polaires 3c et 3d en regard respectivement des deux portions de bobine sur un côté de la bobine opposé aux première et seconde parties polaires. Les parties polaires, qui sont constituées par des aimants permanents 3a, 3b, 3c et 3d, et les plaques ferromagnétiques 6a et 6b sont maintenues mobiles par rapport à la bobine annulaire par l'intermédiaire de deux éléments ressorts 4a et 4b afin de constituer une masse susceptible d'osciller dans un plan perpendiculaire à l'axe de la bobine. Les aimants génèrent un champ magnétique B, qui est conduit dans les plaques ferromagnétiques.

Les premier et troisième aimants permanents 3a et 3c de dimension équivalente ont une direction de polarisation ou magnétisation identique et sont placés respectivement à une distance de d'entrefer déterminée de chaque côté opposé d'une première portion de la bobine annulaire 2. Cette distance d'entrefer de peut être de l'ordre de 0.25 mm, voire de 0.2 mm. Les second et quatrième aimants permanents 3b et 3d de dimension équivalente sont respectivement adjacents des premier et troisième aimants permanents. Les second et quatrième aimants permanents ont une direction de polarisation ou magnétisation identique, mais opposée à celle des premier et troisième aimants permanents. Ces second et quatrième aimants permanents sont placés respectivement à une distance de d'entrefer déterminée de chaque côté opposé d'une seconde portion de la bobine annulaire diamétralement opposée à la première portion.

Quand la bobine annulaire 2 est alimentée par des signaux électriques alternatifs de fréquence déterminée, chaque aimant permanent 3a, 3b, 3c et 3d subit une force dans une même direction X pour que la masse oscille perpendiculairement à la direction Y de l'axe de la bobine. En fonction du signe des signaux électriques, qui sont par exemple des signaux de courant de forme sinusoïdale ou des impulsions rectangulaires de courant, la masse bouge dans une direction positive O+ ou une direction négative O-. La force imposée à la masse oscillante dans une position centrée de la bobine est une force de Laplace donnée par la formule ci-dessous :

$$F = 2 \cdot N \cdot l \cdot i \cdot B$$

où N définit le nombre de spires de la bobine, par exemple 400 spires, l est la longueur d'un aimant permanent dans la direction Z, qui correspond à la longueur de chaque portion de bobine, i la valeur du courant traversant la bobine annulaire, et B l'induction magnétique générée par l'aimant dans la direction Y.

Il est à noter que la force de Laplace s'applique uniquement sur les conducteurs de la bobine en regard de chacun des aimants 3a à 3d. La force F énoncée ci-dessus correspond à la position centrale de la bobine. Comme montré en partie à la figure 2 lors d'un déplacement des aimants permanents par exemple dans une direction O+ selon l'axe X, le nombre de conducteurs de la bobine sous les aimants 3b et 3d tend à diminuer, alors que le nombre de conducteurs sous les aimants 3a et 3c tend à augmenter. Un certain équilibre s'établit, qui tend à maintenir fixe la force sur la bobine lorsque le courant est maintenu constant. Bien entendu, si le déplacement augmente fortement, la force tend à diminuer graduellement.

Dans le cas d'une masse oscillante constituée d'une seule plaque ferromagnétique avec une paire d'aimants de direction de polarisation opposée, la force F imposée à la masse oscillante est approximativement divisée par deux.

Bien entendu pour que la masse oscillante décrive un mouvement sensiblement rectiligne dans la direction X, il est souhaitable que le courant traversant les deux portions de bobine soit dirigé essentiellement dans une direction Y. L'amplitude de ce courant peut être fixée à 5 mA.

Pour assurer ce mouvement rectiligne de la masse oscillante, les éléments ressorts sont de préférence des lames ressorts parallèles 4a et 4b. Ces lames ressorts sont fixées à une de leurs extrémités sur deux côtés opposés de la structure amagnétique 5. Les lames ressorts maintiennent entre des portions libres de mouvement de chaque lame ressort, les plaques ferromagnétiques 6a et 6b sur lesquelles sont fixés les aimants permanents 3a, 3b, 3c et 3d. En l'absence d'alimentation électrique de la bobine annulaire, les lames ressorts maintiennent et rappellent dans une position centrée la masse oscillante.

Les lames ressorts 4a et 4b comprennent une ouverture centrale 9 pour le passage de la bobine 2. Les lames ressorts en forme de cadre comprennent encore deux fentes traversantes longitudinales 8 de chaque côté opposé de l'ouverture centrale. Ces fentes 8 sont pratiquées entre l'extrémité de chaque lame ressort fixée à la structure amagnétique 5 et les portions libres portant les plaques ferromagnétiques avec les aimants permanents. Les fentes sont dimensionnées pour ajuster simplement la fréquence de résonance théorique du vibreur qui peut être de l'ordre de 125 Hz.

Il est à noter que comme aucun couple réluctant parasite ne subsiste à l'état de repos du vibreur dans cette première forme de réalisation, il n'est pas nécessaire d'ajuster cette fréquence de résonance au moyen d'un circuit électronique d'entraînement du vibreur très sophistiqué. De ce fait, un bon dimensionnement desdites fentes 8 permet d'ajuster relativement précisément la fréquence de résonance théorique souhaitée en fonction de la masse oscillante utilisée. Les signaux de courant d'alimentation de la bobine annulaire ont donc une fréquence équivalente de l'ordre de 125 Hz.

La bobine annulaire 2 en forme de galette ou hippodrome comprend de préférence un nombre important de spires jointives et sensiblement coaxiales, par exemple 400 spires réalisées avec un fil de cuivre isolé de 36 ou 39 $\mu$m de diamètre. Cette bobine annulaire est par exemple de forme oblongue comme montré à la figure 2 ou de forme rectangulaire allongée. On peut remarquer également sur cette figure 2 les deux portions 2a et 2b de la bobine annulaire 2, qui sont montrées hachurées, en regard des aimants permanents 3a et 3b fixés sur la plaque ferromagnétique 6a.

Les dimensions de la bobine annulaire peuvent être de l'ordre de 4 mm selon l'axe X, 8 mm ou 10 mm selon l'axe Z, 1.6 mm de largeur des spires jointes et d'une épaisseur $d_b$ de 0.5 mm, voire de 0.4 mm selon l'axe Y. La bobine annulaire a une valeur de résistance comprise préférentiellement entre 88 et 138 $\Omega$ dans une configuration allongée de 25%, et une valeur d'inductance comprise entre 1 et 1.5 mH.

Comme la masse oscillante bouge dans une direction parallèle au plan principal de la bobine, c'est-à-dire perpendiculairement à l'axe de la bobine annulaire, il est possible de maximiser le nombre de spires et le volume de la bobine pour réduire la consommation électrique du vibreur.

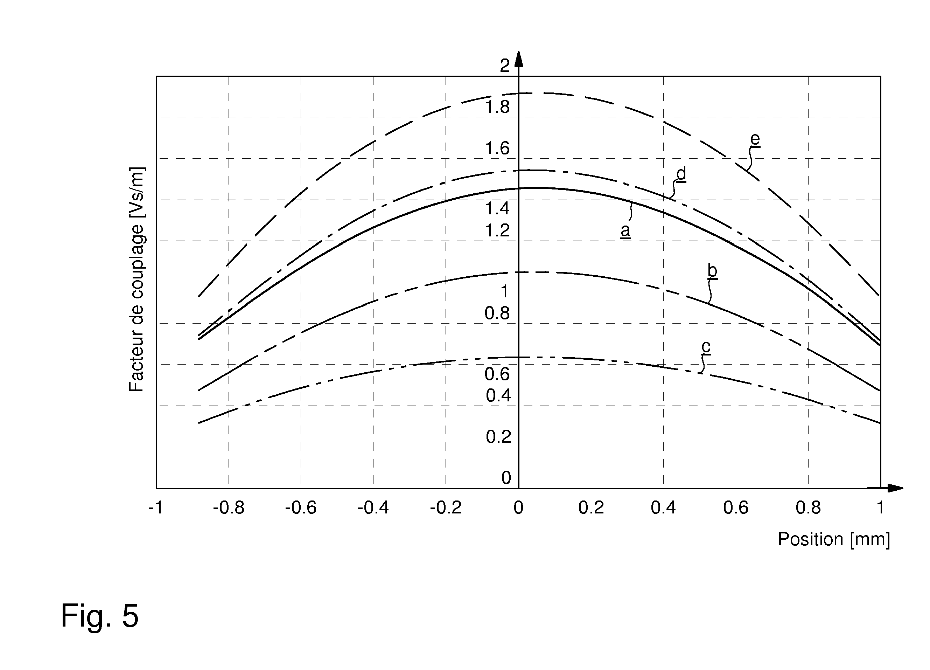

Dans un mode de repos de la bobine, chaque aimant permanent 3a, 3b, 3c et 3d est en regard d'une des portions de bobine 2. Pour obtenir un bon rendement du vibreur, la longueur de chaque portion sensiblement rectiligne de la bobine en regard de chaque aimant permanent doit être la plus grande possible. De ce fait, la bobine est de forme oblongue allongée dans une direction perpendiculaire à la direction de mouvement de la masse oscillante. Ainsi, les aimants permanents sont dimensionnés pour être en regard chacun d'une portion de bobine de longueur supérieure au quart, de préférence supérieure au tiers, du périmètre d'une spire de la bobine. Si la bobine est suffisamment allongée afin que les aimants recouvrent des portions rectilignes plus importantes de la bobine, cela permet d'augmenter la force utile sur la masse oscillante comme expliqué ci-après en référence aux figures 5 à 7.

Chaque aimant permanent a une forme de préférence parallélépipédique dont les dimensions sont par exemple de l'ordre de 1.9 mm selon l'axe X, 5 mm selon l'axe Z et d'une épaisseur $d_a$ de 0.5 mm, voire de 0.35 mm. Le matériau de ces aimants permanents peut être du samarium-cobalt (SmCo) de perméabilité égale à 1.05 ou néodyme-fer-bore (NdFeBo) de perméabilité égale à 1.02. La valeur du champ magnétique d'induction B peut être comprise entre 1 et 1.18 T.

Les plaques ferromagnétiques 6a et 6b sur lesquelles sont fixées les deux paires d'aimants permanents sont également de forme parallélépipédique dont les dimensions sont par exemple de l'ordre de 4 mm selon l'axe X, de 7 à 8.75 mm selon l'axe Z, et d'une épaisseur $d_s$ de 0.5 mm, voire de 0.25 mm selon l'axe Y. Ces plaques ferromagnétiques sont réalisées dans un matériau à grande perméabilité magnétique pour une bonne conduction magnétique entre chaque aimant permanent. Le matériau de ces plaques ferromagnétiques peut être du fer-silicium (FeSi), du fer-cobalt (FeCo) ou du fer doux.

Il est à noter que le flux magnétique dans la structure magnétique ou culasse ferromagnétique mobile, qui peut être réalisée en alliage fer-nickel, est sensiblement constant. De ce fait, les pertes par courants de Foucault dans cette partie du vibreur sont négligeables.

Le vibreur 1 sous forme de module comprend encore deux bornes de connexion électrique 7 à une extrémité de la structure amagnétique 5, qui sont représentées par deux trous métallisés. Deux pistes conductrices, par exemple métalliques non représentées sur la figure 1a, sont pratiquées dans la structure amagnétique pour relier les deux extrémités 10 du fil métallique de la bobine annulaire, montrées en figure 2, et les bornes de connexion électrique 7. Lorsque le vibreur est monté dans le boîtier de la montre-bracelet, les bornes de connexion viennent en contact avec des pistes de connexion électrique d'une plaque à circuit imprimé pour relier électriquement la bobine du vibreur à un circuit électronique d'entraînement non représenté. Ce circuit électronique a pour tâche d'alimenter la bobine par des signaux électriques alternatifs afin de faire osciller la masse oscillante du vibreur.

Bien entendu, les bornes de connexion électrique dudit vibreur 1 peuvent être placées à un autre endroit de la structure amagnétique 5 par exemple sur une tranche de la structure afin de former des plots métalliques pour être soudés directement sur des pistes métalliques d'une plaque à circuit imprimé de la montre.

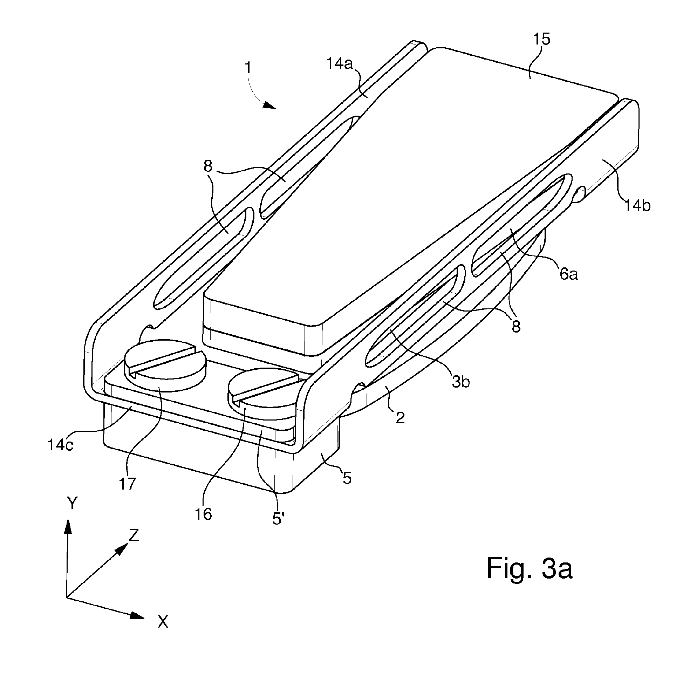

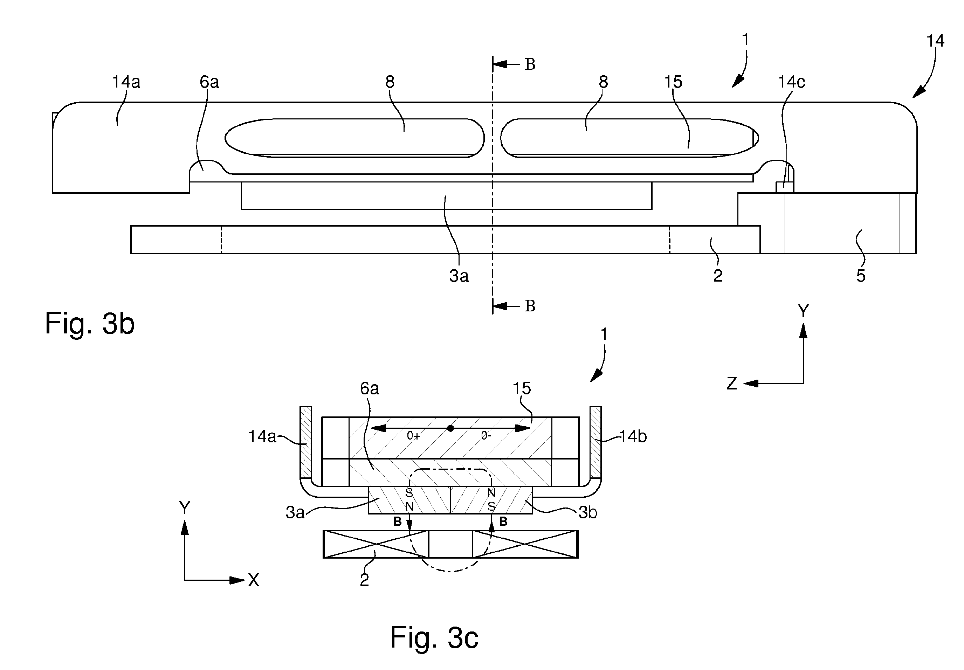

Les figures 3a à 3c représentent un second mode de réalisation du vibreur 1 formant un module destiné à équiper une montre-bracelet en tant qu'objet portable. Il est à noter que les éléments des figures 3a à 3c, qui correspondent à ceux des figures 1a et 1 b, portent des signes de référence identiques. De ce fait par simplification, il ne sera pas répété la description de ces éléments.

La différence essentielle de ce second mode de réalisation est le fait que le vibreur 1 définit un vibreur du type demi Voice Coil. Il ne comprend donc qu'une plaque ferromagnétique 6a sur laquelle sont fixés deux aimants permanents 3a et 3b de direction de polarisation opposée, ainsi qu'une plaque de masse complémentaire 15 disposée sur la plaque ferromagnétique 6a. Cette plaque complémentaire 15 peut être réalisée dans un matériau tel qu'en laiton ou tungstène.

La plaque ferromagnétique 6a avec les deux aimants permanents 3a et 3b et la plaque complémentaire 15 forment la masse oscillante et sont maintenus mobiles par rapport à la bobine annulaire 2 par un élément ressort 14. Il est ainsi possible de maximiser la masse oscillante par rapport au volume complet du vibreur, ce qui correspond dans ce cas de figure à maximiser la masse du rotor par rapport à celle du stator. La masse du rotor peut être 3 fois supérieure à la masse du stator dans cette configuration demi Voice Coil, alors que dans le premier mode de réalisation des figures 1a et 1b, la masse du rotor est environ 2 fois supérieure à la masse du stator.

Cet élément ressort 14 comprend une lame de base 14c fixée par deux vis 17 par l'intermédiaire d'une plaque amagnétique 5' sur la structure amagnétique 5, et deux lames ressorts 14a et 14b venant de matière avec la lame de base et disposées sur deux côtés opposés de la lame de base. Les lames ressorts 14a et 14b sont disposées perpendiculairement par rapport à la lame de base 14c, de manière que la section transversale forme un U. Une lame d'extrémité, non représentée, relie les extrémités des lames ressorts 14a et 14b opposées à la lame de base. Cette lame d'extrémité, sur laquelle est fixée une portion de la plaque ferromagnétique 6a, est dans un plan sensiblement parallèle à la lame de base.

La plaque ferromagnétique 6a et la plaque complémentaire 15 sont placées entre les lames ressorts 14a et 14b sans contact direct avec chaque lame ressort. De préférence, la hauteur de la plaque ferromagnétique 6a et la plaque complémentaire 15 est inférieure à la hauteur de chaque lame ressort 14a et 14b. Les lames ressorts 14a et 14b peuvent comprendre chacune deux fentes traversantes longitudinales 8, qui sont dimensionnées pour ajuster la fréquence de résonance théorique du vibreur.

Chaque plaque 6a et 15 a de préférence une forme trapézoïdale dont la base est fixée sur la lame d'extrémité de l'élément ressort 14. Ceci a pour conséquence d'éloigner le centre de gravité de la masse oscillante de l'endroit de fixation de l'élément ressort sur le support amagnétique 5.

Il est à noter que l'élément ressort peut être facilement réalisé en commun avec d'autres éléments ressorts par des opérations d'emboutissage et de pliage d'une tôle métallique. De préférence, cet élément ressort est réalisé dans un alliage amagnétique pour ne pas court-circuiter le flux d'aimant.

Quand la bobine annulaire 2 du vibreur 1 est alimentée par des signaux électriques alternatifs, la masse oscillante décrit un mouvement sensiblement rectiligne selon l'axe X dans une direction perpendiculaire à l'axe de la bobine selon l'axe Y. Dans cette configuration avec le champ magnétique B généré par les aimants, la force imposée à la masse oscillante est approximativement deux fois moins importante que dans le premier mode de réalisation décrit en référence aux figures 1a et 1 b. Toutefois, la hauteur du vibreur selon l'axe Y est fortement réduite, ce qui permet de pouvoir le monter dans une montre de faible épaisseur pour autant que la masse oscille dans le plan principal du mouvement horloger.

Comme le vibreur est monté dans un boîtier de montre, il est important de maximiser la masse du rotor du vibreur, c'est-à-dire la masse oscillante par rapport à la masse du stator, qui comprend notamment le support amagnétique 5 et la bobine annulaire 2. Dans ce second mode de réalisation, le volume du vibreur est plus petit pour une masse oscillante équivalente que les autres modes de réalisation. De ce fait, la masse oscillante est maximisée par rapport à la masse de la partie fixe du vibreur.

Il est à noter encore que lorsque le vibreur 1 est actionné, les déplacements de la masse oscillante et de la montre sont opposés, et l'amplitude de la montre est significativement plus faible que l'amplitude de la masse oscillante. C'est pourquoi, il est nécessaire de maximiser le rapport de la masse oscillante sur la masse totale de la montre, qui comprend la partie fixe du vibreur. Ainsi, pour des montres légères, plus la masse de la partie fixe du vibreur est grande et plus petite est la course de la montre ressentie, donc une sensation de vibration moins grande pour le porteur de la montre.

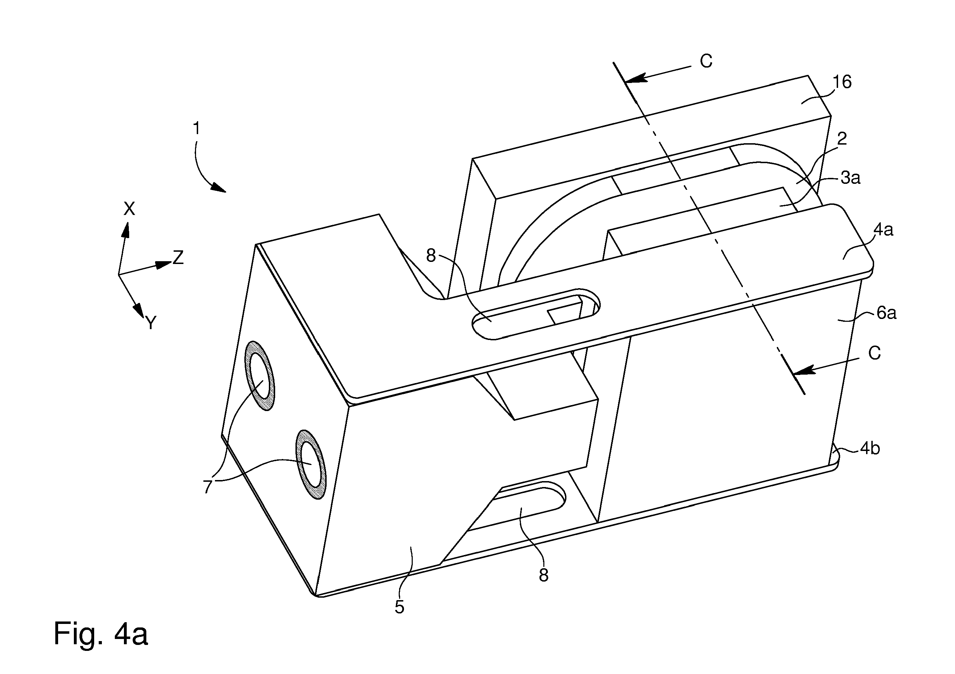

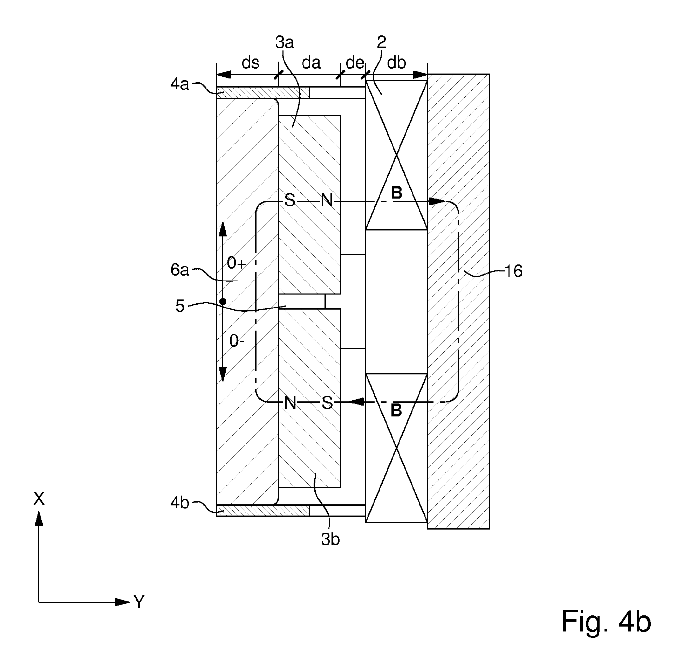

Les figures 4a et 4b représentent un troisième mode de réalisation du vibreur 1 formant un module destiné à équiper une montre-bracelet en tant qu'objet portable. Il est à noter que les éléments des figures 4a et 4b, qui correspondent à ceux des figures 1a, 1b, 3a à 3c portent des signes de référence identiques. De ce fait par simplification, il ne sera pas répété la description de ces éléments.

Par rapport au premier mode de réalisation présenté aux figures 1a et 1 b, la différence essentielle de ce troisième mode de réalisation est que le vibreur est du type demi Voice Coil. Il ne comprend donc qu'une plaque ferromagnétique 6a sur laquelle sont fixés deux aimants permanents 3a et 3b de direction de polarisation opposée pour former la masse oscillante. La masse oscillante est maintenue mobile par rapport à la bobine annulaire 2 entre deux portions libres de mouvement de deux lames ressorts parallèles 4a et 4b. Ces lames ressorts peuvent avoir une forme en L dont la base est fixée sur deux côtés opposés de la structure amagnétique 5. Les aimants permanents en tant que partie polaire sont en regard respectivement de deux portions diamétralement opposées de la bobine annulaire 2.

Dans ce troisième mode de réalisation, le vibreur 1 comprend encore un support ferromagnétique 16 qui est fixé à la bobine annulaire 2 sur un côté opposé à la plaque ferromagnétique 6a avec les aimants permanents 3a et 3b. Ce support ferromagnétique est de dimension plus grande que la bobine de manière à la couvrir entièrement. L'épaisseur de ce support peut être de l'ordre de 0.5 mm.

Même si un couple réluctant subsiste à l'état de repos dudit vibreur, ce support ferromagnétique 16 conduit par contre le champ magnétique B généré par le ou les aimants permanents 3a et 3b. Ceci permet d'éviter de perturber des composants électroniques placés en regard du vibreur sur un côté opposé d'une plaque à circuit imprimé, lorsque les aimants oscillent au-dessus de la bobine fixe 2, car le champ magnétique B devient alternatif pour ces composants fixes. En plus de conduire, le champ magnétique B généré par les aimants permanents, le support ferromagnétique 16 permet d'augmenter la force d'actionnement de la masse oscillante par rapport au second mode de réalisation du vibreur, comme montré à la figure 5.

Cependant, il est à noter qu'une force d'attraction importante en direction de l'axe Y sur les lames ressorts 4a et 4b peut conduire dans cette configuration à un vieillissement prématuré de ces lames ressorts. De plus, par le déplacement des aimant par rapport au support ferromagnétique 16, et au caractère pulsant du courant de la bobine, des courants induits sont créés. De ce fait, cela peut avoir pour effet une augmentation du coefficient de frottement visqueux résultant, et une détérioration du rendement du vibreur, par rapport aux premier et second modes de réalisation. Ce coefficient de frottement visqueux peut aussi être dépendant des conditions de porter de ladite montre.

Une comparaison entre différents dimensionnements et configurations du vibreur comme décrit ci-devant est expliquée en référence aux figures 5 à 7. Tout d'abord en référence à la figure 5, il est représenté un graphique relatif au flux couplé aimant-bobine en fonction de la position de la masse oscillante par rapport au centre de la bobine, pour définir un facteur de couplage. La masse oscillante peut décrire un mouvement entre -1 mm et 1 mm par rapport au centre de ladite bobine, lorsque la bobine est alimentée par un courant alternatif d'amplitude de l'ordre de 5 mA à une fréquence voisine de 125 Hz. Plus la masse s'éloigne de la position centrale de la bobine, et plus le facteur de couplage décroît pour toutes les configurations de vibreur.

La courbe a représente un vibreur selon le premier mode de réalisation des figures 1a et 1b de hauteur totale égale à 3 mm selon l'axe Y avec une bobine de 400 spires, des plaques en matériau ferromagnétique FeSi et des aimants en matériau SmCo. Le facteur de couplage, qui est la dérivée du flux couplé aimant-bobine et qui représente également la force par ampère, est de l'ordre de 1.445 Vs/m.

La courbe b représente un vibreur selon le troisième mode de réalisation des figures 4a et 4b de hauteur totale égale à 2.25 mm selon l'axe Y avec une bobine de 400 spires, des plaques en matériau ferromagnétique FeSi et des aimants en matériau SmCo. Le facteur de couplage est de l'ordre de 1.047 Vs/m.

La courbe c représente un vibreur selon le second mode de réalisation des figures 3a et 3b de hauteur totale égale à 1.75 mm selon l'axe Y avec une bobine de 400 spires, des plaques en matériau ferromagnétique FeSi et des aimants en matériau SmCo. Le facteur de couplage est de l'ordre de 0.617 Vs/m.

La courbe d représente un vibreur selon le premier mode de réalisation des figures 1a et 1b de hauteur totale égale à 2 mm selon l'axe Y avec une bobine de 400 spires. La hauteur de chaque plaque ferromagnétique est de 0.25 mm. La hauteur de chaque aimant permanent est de 0.35 mm. La hauteur de la bobine est de 0.4 mm. Finalement, la distance de chaque entrefer est de 0.2 mm. Les plaques sont en matériau FeCo et les aimants sont en matériau NdFeBo. Le facteur de couplage dans ce cas est de l'ordre 1.537 Vs/m.

La courbe e représente un vibreur selon le premier mode de réalisation des figures 1a et 1b de hauteur totale égale à 2 mm selon l'axe Y avec une bobine de 400 spires, mais avec une géométrie de la bobine et de la masse oscillante allongée de 25%. Les plaques sont en matériau FeCo et les aimants sont en matériau NdFeBo. Le facteur de couplage dans cette version allongée du vibreur est de l'ordre 1.9 Vs/m, ce qui est plus important que les autres configurations de vibreur et permet d'avoir un meilleur rendement.

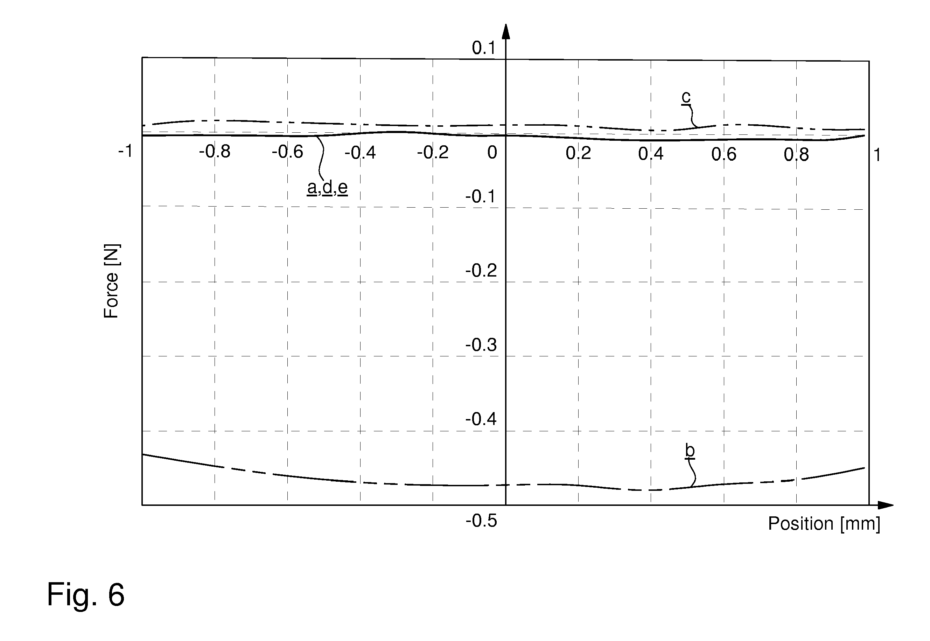

La figure 6 représente un graphique de la force parasite dans la direction Y perpendiculaire à la direction de mouvement de la masse oscillante, en fonction de la position de ladite masse par rapport au centre de la bobine. Les courbes a à e correspondent aux différentes configurations du vibreur décrites ci-dessus en référence à la figure 5.

On constate que pour toute position de la masse oscillante par rapport au centre de la bobine, la force parasite due à l'attraction magnétique selon l'axe Y est théoriquement nulle pour les configurations de vibreur des courbes a, d, e, qui correspondent au premier mode de réalisation montré aux figures 1 a et 1 b. Dans le cas du vibreur selon le second mode de réalisation de la courbe c montré aux figures 3a à 3c, il y a une légère force parasite de l'ordre de 9 mN sur la paire d'aimants fixés sur la plaque ferromagnétique lorsque la bobine est alimentée. Finalement dans le cas du vibreur selon le troisième mode de réalisation de la courbe b montré aux figures 4a et 4b, il y a une force parasite beaucoup plus importante, qui peut valoir 0.469 N au centre de la bobine ou 0.43 N à +/- 1 mm du centre de la bobine.

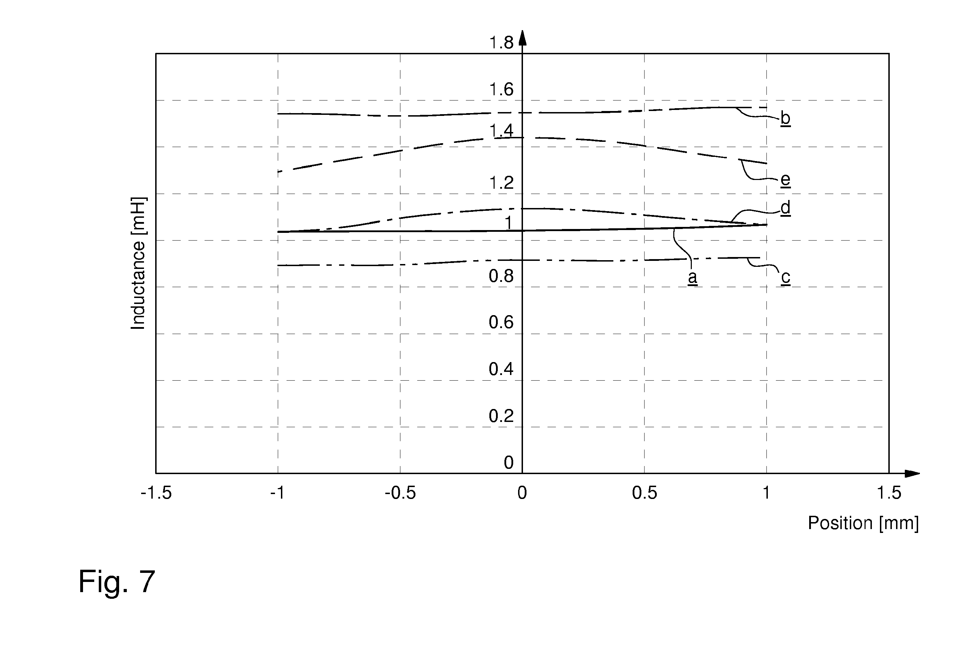

La figure 7 représente un graphique de la valeur d'inductance de la bobine en fonction de la position de la masse oscillante par rapport au centre de la bobine. Dans la configuration du vibreur selon le premier mode de réalisation correspondant à la courbe a, la valeur centrale d'inductance est de 1.01 mH. Dans la configuration du vibreur selon le troisième mode de réalisation correspondant à la courbe b, la valeur centrale d'inductance est de 1.52 mH. Dans la configuration du vibreur selon le second mode de réalisation correspondant à la courbe c, la valeur centrale d'inductance est de 0.88 mH. Dans la configuration du vibreur selon le premier mode de réalisation correspondant à la courbe d, la valeur centrale d'inductance est de 1.11 mH, qui diminue légèrement en s'éloignant de la position centrale. Finalement, dans la configuration du vibreur rallongé selon le premier mode de réalisation correspondant à la courbe e, la valeur centrale d'inductance est de 1.4 mH.

En comparaison, au vibreur du document EP 0 625 738, la valeur d'inductance du vibreur du type Voice Coil selon l'invention est beaucoup plus faible, étant donné également que la bobine n'est pas montée sur une culasse ferromagnétique. De ce fait, il est possible de faire vibrer le vibreur avec un principe d'auto-commutation équivalent au vibreur du document EP 0 625 738, mais à des fréquences bien supérieures à 150 Hz. Ainsi, le vibreur selon l'invention peut avoir une plus petite masse oscillante, car il est possible de maintenir l'impulsion électrique à un niveau normal en augmentant simplement la fréquence jusqu'à des limites physiologiques de sensation de vibration du porteur de la montre.

En fonction des différentes configurations du vibreur expliquées ci-devant, on constate qu'un vibreur de 2 mm de hauteur dans la direction Y selon le premier mode de réalisation possède un rendement meilleur du point de vue force que le vibreur des second et troisième modes de réalisation. Ceci permet d'équiper une montre-bracelet de faible épaisseur tout en garantissant une vibration de la masse oscillante suffisante pour être ressentie par le porteur de la montre. La masse oscillante peut être composée également de parties en laiton ou tungstène. Il est également possible de gagner environ 31% de force électrodynamique en allongeant ledit vibreur de 25% tout en gardant une hauteur minimale de 2 mm dans la direction Y.

Dans le cas où l'épaisseur du boîtier de la montre-bracelet est suffisante, il peut être envisagé également de monter ledit vibreur dans une position telle que sa masse oscillante décrive un mouvement de vibration dans une direction perpendiculaire au fond du boîtier de la montre et au poignet du porteur de la montre-bracelet. Cela permet d'offrir audit porteur de la montre-bracelet une meilleure sensation de vibration du vibreur utilisé comme une alarme silencieuse par exemple.

A partir de la description qui vient d'être faite de multiples variantes de réalisation du vibreur pour un objet portable peuvent être conçues par l'homme du métier sans sortir du cadre de l'invention définie par les revendications. La forme de la bobine annulaire et des aimants peut être différente de celle décrite ci-dessus pour autant que les aimants oscillent dans un plan parallèle au plan de la bobine annulaire lors de l'alimentation électrique de ladite bobine. La bobine pourrait n'être composée que d'une seule spire. Au moins une paire d'aimants décrite ci-dessus peut être remplacée par un aimant ayant une magnétisation circulaire autour d'un centre situé sur l'axe de la bobine. Le vibreur peut ne comprendre qu'un seul aimant permanent et une seule partie polaire en regard d'une portion de bobine, maintenus à la structure amagnétique par un élément ressort qui peut être différent d'une simple lame ressort. Le vibreur peut comprendre également deux aimants de direction de polarisation identique et placés en regard d'une même portion de bobine sur des côtés opposés de la bobine. De plus, la ou les parties polaires en regard d'au moins une portion de la bobine annulaire peuvent être composées de pièces ferromagnétiques autre que les aimants permanents. Dans ce cas, la structure magnétique peut comprendre différentes branches réunies décrivant une forme de C où les extrémités du C représentent deux parties polaires en matériau ferromagnétique dirigées de part et d'autre d'une portion de la bobine, et un aimant permanent est disposé dans une des branches. Les différentes branches conduisent le champ magnétique généré par l'aimant permanent de manière que le champ magnétique sortant des parties polaires en direction de la portion de bobine soit parallèle à l'axe de la bobine.

**Revendications**

1. Vibreur (1) pour un objet portable, le vibreur comprenant une bobine plate annulaire (2) reliée à une structure fixe amagnétique (5), ladite bobine étant constituée d'un enroulement d'une ou plusieurs spires sensiblement coaxiales, et une masse oscillante reliée à la structure amagnétique par au moins un élément ressort (4a, 4b, 14) afin d'être montée mobile par rapport à la bobine annulaire sans contact mécanique avec ladite bobine, la masse oscillante comprenant une structure magnétique avec au moins un aimant permanent (3a, 3b, 3c, 3d), **caractérisé en ce qu'**une partie polaire de la structure magnétique est positionnée distante et en regard d'une portion (2a, 2b) de la bobine annulaire afin que le champ magnétique produit par l'aimant permanent soit dirigé à la sortie de la partie polaire de la structure magnétique dans une direction sensiblement parallèle à un axe de la bobine de manière que la masse oscillante décrive un mouvement dans une direction sensiblement perpendiculaire à l'axe de la bobine parallèlement au plan de la ou des spires de la bobine quand ladite bobine est alimentée par des signaux électriques alternatifs à une fréquence déterminée.

2. Vibreur (1) selon la revendication 1, **caractérisé en ce que** la partie polaire de la structure magnétique comprend l'aimant permanent.

3. Vibreur (1) selon l'une des revendications 1 et 2, **caractérisé en ce que** la partie polaire est positionnée à une distance d'entrefer déterminée et en regard de la portion de bobine sur une longueur inférieure à la moitié de la longueur d'une spire intérieure de la bobine.

4. Vibreur (1) selon la revendication 3, **caractérisé en ce que** la portion de bobine en regard de la partie polaire de la structure magnétique est sensiblement rectiligne ou légèrement incurvée de manière que la force d'entraînement de la masse oscillante soit perpendiculaire à la direction d'un courant électrique d'alimentation de la bobine traversant la portion de bobine et au champ magnétique sortant de la partie polaire de la structure magnétique.

5. Vibreur (1) selon l'une des revendications 3 et 4, **caractérisé en ce que** la bobine annulaire (2) a une forme oblongue ou une forme d'un rectangle allongé de manière que la partie polaire puisse être en regard d'une portion de la bobine de longueur supérieure au quart, de préférence supérieure au tiers, du périmètre d'une spire de la bobine, et **en ce que** la largeur de la partie polaire de la structure magnétique est supérieure à la largeur de la portion de bobine.

6. Vibreur (1) selon l'une des revendications précédentes, **caractérisé en ce que** l'élément ressort est constitué d'une lame ressort (4a) dont une des extrémités est fixée à la structure amagnétique et une portion libre de la lame ressort porte l'aimant permanent (3a) en tant que partie polaire de la structure magnétique, ladite lame ressort étant susceptible de fléchir dans une direction perpendiculaire à l'axe de la bobine, quand ladite bobine est alimentée par des signaux électriques alternatifs.

7. Vibreur (1) selon la revendication 6, **caractérisé en ce que** la structure magnétique de la masse oscillante comprend une seconde partie polaire, qui est constituée d'un second aimant permanent (3b) de direction de polarisation opposée au premier aimant permanent adjacent (3a), la seconde partie polaire étant positionnée distante et en regard d'une seconde portion de bobine diamétralement opposée à la première portion de bobine et de longueur identique, de manière que les première et seconde parties polaires de la structure magnétique oscille dans une direction sensiblement perpendiculaire à l'axe de la bobine quand ladite bobine est alimentée par des signaux électriques alternatifs.

8. Vibreur (1) selon la revendication 7, **caractérisé en ce qu'**il comprend un second élément ressort, qui est une seconde lame ressort (4b) parallèle à la première lame ressort (4a), les première et seconde lames ressorts étant fixées sur deux côtés opposés de la structure amagnétique sans contact mécanique avec la bobine annulaire, et **en ce que** les premier et second aimants permanents (3a, 3b), en tant que première et seconde parties polaires, sont maintenus entre des portions libres des deux lames ressorts parallèles de manière à constituer une masse oscillante.

9. Vibreur (1) selon la revendication 8, **caractérisé en ce que** les premier et second aimants permanents adjacents sont fixés sur une plaque ferromagnétique (6a) maintenue entre les portions libres des deux lames ressorts parallèles.

**10.** Vibreur (1) selon l'une des revendications 1 à 5, **caractérisé en ce que** l'élément ressort (14) comprend une lame de base (14c) fixée sur la structure amagnétique (5), deux lames ressorts (14a, 14b) venant de matière avec la lame de base et disposés perpendiculairement à la lame de base sur deux côtés opposés de ladite lame de base, et une lame d'extrémité parallèle à la lame de base, et **en ce qu'**un premier et/ou un second aimants permanents (3a, 3b) adjacents, en tant que partie polaire, sont fixés sur une plaque ferromagnétique (6a) pour constituer une masse oscillante, cette plaque ferromagnétique étant fixée sur la lame d'extrémité de l'élément ressort et disposée entre les deux lames ressorts.

**11.** Vibreur (1) selon la revendication 10, **caractérisé en ce qu'**il est configuré de manière que la valeur de masse de la masse oscillante est deux fois supérieure, de préférence trois fois supérieure à la valeur de masse des parties fixes du vibreur.

**12.** Vibreur (1) selon l'une des revendications 7 à 11, **caractérisé en ce qu'**un support ferromagnétique (16) est fixé sur la bobine annulaire (2) sur un côté de la bobine opposé aux premier et second aimants permanents (3a, 3b), le support ferromagnétique couvrant entièrement ladite bobine annulaire.

**13.** Vibreur (1) selon l'une des revendications 7 et 8, **caractérisé en ce que** chaque lame ressort comprend au moins une fente traversante longitudinale (8) entre l'extrémité fixée à la structure amagnétique et la portion libre portant les aimants, cette fente longitudinale étant dimensionnée de manière à ajuster la fréquence de résonance théorique de la masse oscillante.

**14.** Vibreur (1) selon la revendication 8, **caractérisé en ce que** la structure magnétique comprend un troisième aimant permanent (3c) positionné distant et en regard de la première portion de bobine sur un côté de la bobine opposé au premier aimant permanent (3a), la direction de polarisation du troisième aimant permanent étant identique au premier aimant permanent, **en ce que** la structure magnétique comprend un quatrième aimant permanent (3d) adjacent au troisième aimant permanent (3c) et de direction de polarisation opposée au troisième aimant permanent, le quatrième aimant permanent étant positionné distant et en regard de la seconde portion de bobine sur un côté de la bobine opposé au second aimant permanent (3b), les premier, second, troisième et quatrième aimants permanents étant maintenus entre des portions libres des deux lames ressorts (4a, 4b).

**15.** Vibreur (1) selon la revendication 14, **caractérisé** **en ce que** les troisième et quatrième aimants permanents adjacents sont fixés sur une seconde plaque ferromagnétique (6b) maintenue entre les portions libres des deux lames ressorts parallèles, ladite seconde plaque ferromagnétique étant placée d'un côté de la bobine opposé à la première plaque ferromagnétique (6a), et **en ce que** chaque lame ressort comprend une ouverture centrale (9) pour le passage de la bobine annulaire, et deux fentes traversantes longitudinales une de chaque côté de l'ouverture centrale pour ajuster la fréquence de résonance théorique de la masse oscillante.

**16.** Montre-bracelet en tant qu'objet portable comprenant un vibreur (1) selon l'une des revendications précédentes, **caractérisée en ce que** le vibreur est positionné dans un boîtier de ladite montre de telle manière que la masse oscillante du vibreur oscille dans une direction sensiblement perpendiculaire au fond du boîtier de la montre, quand la bobine annulaire est alimentée par des signaux électriques alternatifs de fréquence déterminée.

Fig. 1a

Fig. 1b

Fig. 2

Fig. 3a

Fig. 3b

Fig. 3c

EP 1 659 676 A1

Fig. 4a

EP 1 659 676 A1

Fig. 4b

Fig. 5

EP 1 659 676 A1

Fig. 6

Fig. 7

EP 1 659 676 A1

**Office européen
des brevets**

**RAPPORT DE RECHERCHE EUROPEENNE**

Numéro de la demande

EP 04 10 5855

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 004, no. 170 (E-035), 22 novembre 1980 (1980-11-22) & JP 55 117462 A (MATSUSHITA ELECTRIC WORKS LTD), 9 septembre 1980 (1980-09-09) | 1-4,6-15 | H02K33/16 |
| Y | * abrégé * | 16 | |
| Y | | 5 | |
| | ----- | | |
| Y,D | EP 0 625 738 A (ASULAB S.A) 23 novembre 1994 (1994-11-23) * abrégé; figure 1 * | 16 | |
| | ----- | | |
| Y | PATENT ABSTRACTS OF JAPAN vol. 008, no. 039 (E-228), 21 février 1984 (1984-02-21) & JP 58 198160 A (IWAO IKEGAMI), 18 novembre 1983 (1983-11-18) * abrégé; figures 1-5 * | 5 | |
| | ----- | | |
| A | US 5 909 068 A (WAKIWAKA ET AL) 1 juin 1999 (1999-06-01) * colonne 4, ligne 54 - colonne 5, ligne 58; figure 2 * | 1-16 | DOMAINES TECHNIQUES RECHERCHES (Int.Cl.7) |
| | ----- | | H02K |
| A | US 5 559 378 A (OUDET ET AL) 24 septembre 1996 (1996-09-24) * abrégé; figure 1 * | 1-16 | |
| | ----- | | |

Le présent rapport a été établi pour toutes les revendications

| Lieu de la recherche | Date d'achèvement de la recherche | Examinateur |
|---|---|---|
| Munich | 15 février 2005 | Kugler, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 10 5855

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-02-2005

| Document brevet cité au rapport de recherche | | Date de publication | Membre(s) de la famille de brevet(s) | | Date de publication |
|---|---|---|---|---|---|
| JP 55117462 | A | 09-09-1980 | JP | 1273443 C | 11-07-1985 |
| | | | JP | 59052625 B | 20-12-1984 |
| EP 0625738 | A | 23-11-1994 | CH | 685185 A3 | 28-04-1995 |
| | | | CN | 1104779 A ,C | 05-07-1995 |
| | | | DE | 69407090 D1 | 15-01-1998 |
| | | | DE | 69407090 T2 | 02-07-1998 |
| | | | EP | 0625738 A1 | 23-11-1994 |
| | | | HK | 1005212 A1 | 24-12-1998 |
| | | | JP | 3512851 B2 | 31-03-2004 |
| | | | JP | 7140265 A | 02-06-1995 |
| | | | US | 5365497 A | 15-11-1994 |
| JP 58198160 | A | 18-11-1983 | AUCUN | | |
| US 5909068 | A | 01-06-1999 | JP | 3165856 B2 | 14-05-2001 |
| | | | JP | 10180186 A | 07-07-1998 |
| US 5559378 | A | 24-09-1996 | FR | 2682542 A1 | 16-04-1993 |
| | | | DE | 69209308 D1 | 25-04-1996 |
| | | | DE | 69209308 T2 | 21-11-1996 |
| | | | EP | 0607354 A1 | 27-07-1994 |
| | | | WO | 9307673 A1 | 15-04-1993 |
| | | | JP | 7502877 T | 23-03-1995 |
| | | | JP | 3304976 B2 | 22-07-2002 |

EPO FORM P0460

Pour tout renseignement concernant cette annexe : voir Journal Officiel de l'Office européen des brevets, No.12/82